**Europäisches Patentamt**

**European Patent Office**

**Office européen des brevets**

(19)

(11) Veröffentlichungsnummer : **0 365 892 B1**

## (12) EUROPÄISCHE PATENTSCHRIFT

(45) Veröffentlichungstag der Patentschrift :
**17.06.92 Patentblatt 92/25**

(51) Int. Cl.$^5$ : **F02M 35/12**

(21) Anmeldenummer : **89118569.6**

(22) Anmeldetag : **06.10.89**

(54) **Luftansaugvorrichtung für eine Brennkraftmaschine.**

(30) Priorität : **24.10.88 DE 3836166**

(43) Veröffentlichungstag der Anmeldung :
**02.05.90 Patentblatt 90/18**

(45) Bekanntmachung des Hinweises auf die
Patenterteilung :
**17.06.92 Patentblatt 92/25**

(84) Benannte Vertragsstaaten :
**AT CH DE FR GB IT LI NL SE**

(56) Entgegenhaltungen :
**EP-A- 0 091 038
FR-A- 1 123 855
GB-A- 2 070 682
US-A- 3 987 862
PATENT ABSTRACTS OF JAPAN vol. 10, no.
25 (M-450)(2082) 31 Januar 1986, JP-A-60
183230**

(73) Patentinhaber : **Iveco Magirus
Aktiengesellschaft
Schillerstrasse 2 Postfach 27 40
W-7900 Ulm/Donau (DE)**

(72) Erfinder : **Mack, Dieter, Dipl.-Ing. (FH)
Jahnstrasse 11
W-7907 Langenau (DE)**
Erfinder : **Six, Werner, Dipl.-Ing. (FH)
Hubertusweg 18
W-7916 Nersingen (DE)**

(74) Vertreter : **Socha, Peter
Iveco Magirus AG Postfach 2740
Schillerstrasse 2
W-7900 Ulm (DE)**

## Beschreibung

Die Erfindung betrifft eine Luftansaugvorrichtung für eine Brennkraftmaschine, mit einem Luftfilter und einer Geräuschdämpfungseinrichtung im Kniebereich des Luftfilter-Ansaugschnorchels.

Bei einer bekannten Luftansaugvorrichtung für eine Brennkraftmaschine eines Nutzfahrzeuges ist ein Ansauggeräuschdämpfer vorgesehen, der als diskretes Bauteil in Reihe in der Luftansaugleitung angeordnet ist. Die Konstruktion ist insgesamt sperrig und montagemäßig aufwendig getroffen. Im Geräuschdämpfergehäuse sind bekannte Geräuschdämpfungseinbauten auf übliche Weise aggregiert.

Eine weitere Luftansaugvorrichtung ist aus DE-OS 28 54 866 bekannt. Im Ansaugschnorchel der Luftansaugvorrichtung wird insbesondere Wasser aus der angesaugten Luft abgesondert, was im Betrieb mit einer erheblichen Vergrößerung des Ansauggeräusches einhergeht und durch die nachgeordnete Geräuschdäm-fungseinrichtung nicht gemindert werden kann. Bei beiden vorgenannten Luftansaugvorrichtungen befindet sich die Ansaugstelle über dem Fahrerhaus, wodurch ein Überbau (z.B. bei einem Autotransporter) nicht möglich ist. Ein weiterer Nachteil ist, daß durch die Lage der Ansaugöffnung direkt über dem Fahrerhausdach der Innengeräuschpegel durch Anregung des Fahrerhausdaches erhöht werden kann.

Aus EP-A-091 038 ist eine Luftansaugvorrichtung der eingangs genannten Art bekannt, welche eine Geräuschdämpfungseinrichtung in Form eines Abzweigresonators im Kniebereich des Ansaugschnorchels besitzt. Der Abzweigresonator ist im Ansaugschnorchel integriert ausgebildet und allenfalls nur für einen bestimmten Motorentyp geeignet.

Aufgabe der Erfindung ist die Schaffung einer Luftansaugvorrichtung der eingangs genannten Art, die sehr kompakt und einfach aufgebaut ist, im Betrieb mit einem sehr geringen Luftansauggeräusch einhergeht und insbesondere für verschiedene Brennkraftmaschinentypen geeignet ist.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 8.

Wesen der Erfindung ist, ein die Geräuschdämpfungseinrichtung enthaltenden Schnorcheleinsatz als Modulbaustein auszubilden, welcher im Hinblick auf ein Dämpfungsoptimum je nach Motorentyp ausgewählt und in den Ansaugschnorchel eingebaut bzw. in diesem umgerüstet werden kann. Der Schnorcheleinsatz kann diverse Geräuschdämpfungseinrichtungen enthalten.

Bei einem Nutzfahrzeug mit Fahrerhaus ist der Ansaugschnorchel vorzugsweise direkt hinter dem Fahrerhaus angeordnet.

Zweckmäßigerweise ist das innere Rohr des Ansaugschnorchels nach Art eines Venturirohrs diffusorartig ausgebildet. Das Venturirohr wird als sog. Drosseldämpfer breitbandig betrieben und ist für mittlere und höhere Frequenzbereiche geeignet, zumal in ihm die Strömungsgeschwindigkeit erhöht und damit bei niedrigeren Strömungsgeschwindigkeiten die vorherrschenden besonders lästigen Tiefenfrequenzen in höhere umgewandelt und damit beseitigt werden. Somit erfolgt im Ergebnis eine Glättung der pulsierenden Strömungsschwingungen, d.h. Abbau der Schwingungsspitzen.

Eine vorteilhafte Weiterbildung der Erfindung sieht vor, daß im äußeren Winkelbereich des Knies des Ansaugschnorchels ein Abzweigresonator ausgebildet ist. Der Abzweigresonator bewirkt eine schmalbandige Dämpfung und eignet sich für Frequenzen im tiefen bis mittleren Bereich. Mithin werden durch den Drosseldämpfer in Kombination mit einem Abzweigresonator sehr gute Dämpfungseigenschaften praktisch über das gesamte Frequenzband erzielt.

Besonders vorteilhaft ist es, wenn das innere Rohr des Ansaugschnorchels als sog. Absorptionsstrecke ausgebildet, d.h. aus einem Geräuschdämpfungsmaterial aufgebaut oder mit einem solchen Material ausgekleidet ist. Die Absorptionsstrecke wirkt breitbandig und eignet sich für mittlere und höhere Frequenzbereiche von ca. 150 bis 5000 Hz. Dadurch wird die Ansauggeräuschdämpfung im Betrieb weiter verbessert.

Zusätzlich kann die Geräuschdämpfungseinrichtung einen Pfeifenresonator umfassen, der im Ausgangsbereich des Knies des Ansaugschnorchels vorgesehen ist. Der Pfeifenresonator schließt sich zweckmäßigerweise unmittelbar an die Durchtrittsöffnung des Abzweigresonators an. Der Pfeifenresonator wirkt schmalbandig und unterstützt die Dämpfung insbesondere im mittleren Frequenzbereich.

Vorteilhafterweise kann an der Unterseite des unmittelbaren Eintrittsbereichs des Ansaugschnorchels eine Wasseraustrittsöffnung vorgesehen sein, die das Wasser aus der angesaugten Luft absondert, gleichwohl aber nicht mit einem erhöhten Ansauggeräusch einhergeht, wie dies beispielsweise nach der Vorrichtung gemäß der eingangs genannten DE-OS 28 54 866 der Fall ist.

Bei der Erfindung ist der Ansaugschnorchel gleichzeitig als Geräuschdämpfer ausgebildet und direkt hinter dem Fahrerhaus angeordnet. Dabei sind verschiedene (an sich bekannte) Geräuschdämpfungselemente derart kombiniert und im Kniebereich des Ansaugschnorchels angeordnet, daß sie den vorhandenen Raum sowohl in räumlicher als auch in wirkungsmäßiger Hinsicht optimal zur Geräuschdämpfung ausnutzen. Dachaufbauten

EP 0 365 892 B1

über dem Fahrerhaus sind ohne weiteres möglich. Der Ansaugschnorchel und der Ansauggeräuschdämpfer sind eine kompakte Einheit, einfach aufgebaut und bestehen aus wenigen Teilen. Dies geht zudem mit einer Gewichtsersparnis einher. Befindet sich die Ansaugöffnung hinter der hinteren Fahrerhauswand, erfährt die Fahrerhausoberfläche keine Schwingungsanregung und damit kein erhöhtes Innengeräusch. Der Schnorcheleinsatz kann als sog. Modulsystem aufgebaut sein. Hierbei werden Dämpfereinsätze im Knie des Ansaugschnorchels je nach Motorzuordnung entsprechend ausgewählt.

Die Erfindung wird nachfolgend anhand von Ausführungsbeispielen unter Bezugnahme auf die beigefügte Zeichnung näher erläutert; es zeigen:

Fig. 1 in schematischer Rückansicht ein Nutzfahrzeug mit einer Luftansaugvorrichtung hinter dem Fahrerhaus,

Fig. 2 den Ansaugschnorchel der Luftansaugvorrichtung in einem schematischen Vertikalschnitt,

Fig. 3 den Ansaugschnorchel ähnlich der Fig. 2 in anderer Ausführungsform,

Fig. 4 die Variante nach Fig. 3 mit einer Wasseraustrittsöffnung, und

Fig. 5 einen Ansaugschnorchel ähnlich den Fig. 2 bis 4 mit einem zusätzlichen Pfeifenresonator.

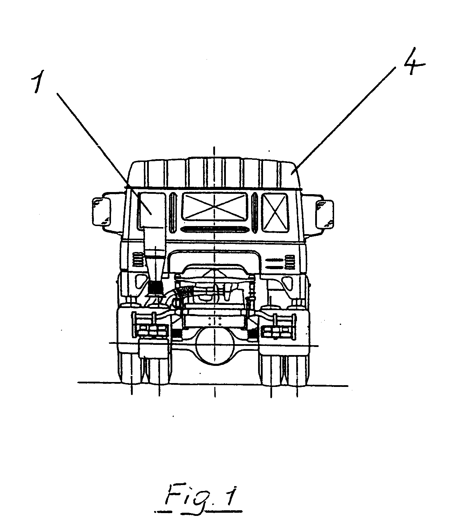

Gemäß Zeichnung ist eine Luftansaugvorrichtung (1) mit Luftfilter und einer Geräuschdämpfungseinrichtung (2) zum Ansaugen von Verbrennungsluft für eine Brennkraftmaschine eines Nutzfahrzeuges vorgesehen. Hierbei befindet sich der Ansaugschnorchel (3) der Luftansaugvorrichtung (1) in vertikaler Anordnung hinter dem Fahrerhaus (4), wie dies insbesondere der Fig. 1 zu entnehmen ist.

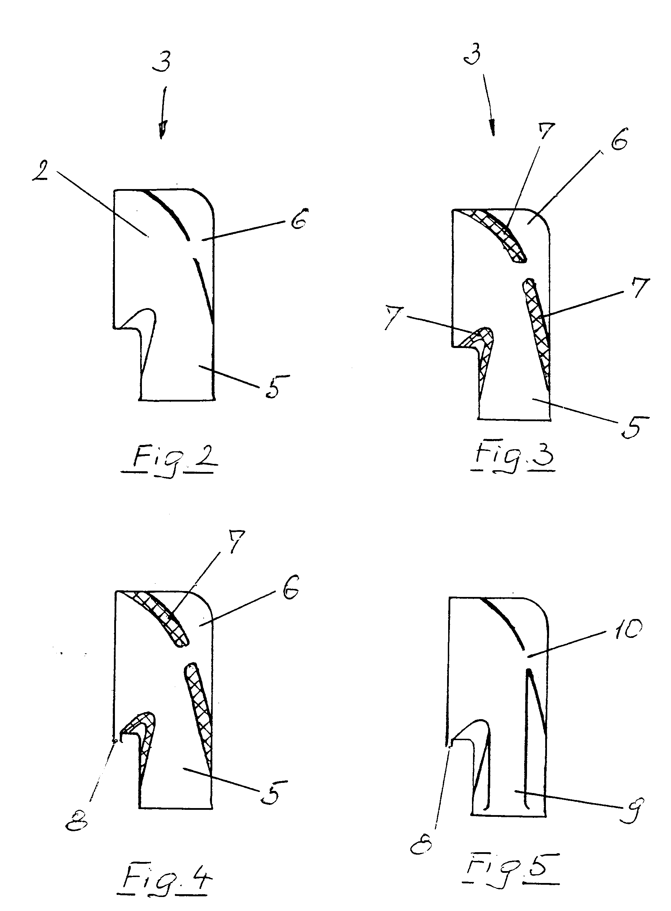

Insbesondere ist die Geräuschdämpfungseinrichtung (2) im Kniebereich des Ansaugschnorchels (3) integriert ausgebildet, wie dies aus den Fig. 2 bis 5 ersichtlich ist. Verschiedene an sich bekannte Geräuschdämpfungselemente sind im Kniebereich derart kombiniert, daß sie den vorhandenen Raum des Schnorchels sowohl in räumlicher als auch in wirkungsmäßiger Hinsicht optimal zur Geräuschdämpfung ausnutzen. Die Anordnung hinter dem Fahrerhaus ermöglicht einen zusätzlichen Dachaufbau. Durch die vorgesehene Lage der Ansaugöffnung wird die Fahrerhauswand nicht in Schwingung versetzt, wodurch kein erhöhtes Geräusch im Fahrerhausinnern entsteht. Die verschiedenen Dämpfungselemente im Schnorchel sind modulartig aufgebaut, d.h. es werden die Dämpfereinsätze je nach Motorzuordnung entsprechend ausgewählt.

Gemäß Fig. 2 ist das innere Rohr des Ansaugsschnorchels (3) nach Art eines Venturirohrs (5) diffusorartig ausgebildet. Das Venturirohr (5) ist ein sog. Drosseldämpfer, der im Betrieb über ein breites Frequenzfeld wirkungsvoll arbeitet und insbesondere für mittlere und höhere Frequenzbereiche geeignet ist. Im Betrieb ergeben sich erhöhte Strömungsgeschwindigkeiten, wodurch bei von Haus aus niedrigen Strömungsgeschwindigkeiten die vorherrschenden besonders lästigen Tiefenfrequenzen in höhere umgewandelt und durch den Drosseldämpfer beseitigt bzw. gedämpft werden. Es werden also pulsierende Strömungsschwingungen geglättet und Schwingungsspitzen dadurch abgebaut.

Gemäß Fig. 2 ist das Venturirohr (5) im Innern des rechtwinkligen Knies des Ansaugschnorchels (3) angeordnet. Durch den engsten Strömungsquerschnitt des Venturirohrs (5) entstehen im Knie zusätzliche Räume, die dämpfungsmäßig anderweitig genutzt werden können. Zum einen kann der äußere Winkelbereich des Knies gemäß den Fig. 2, 3, 4 und 5 als sog. Abzweigresonator (6) ausgestaltet sein, der über eine Durchtrittsöffnung (10) mit dem Venturirohr (5) verbunden ist. Der Abzweigresonator ist mithin baulich optimal im Knie zusammen mit dem Drosseldämpfer des Venturirohres vereint. Er schafft eine schmalbandige Dämpfung im Betrieb und eignet sich für Frequenzen im tiefen bis mittleren Bereich.

Die äußeren und inneren Winkelbereiche des Knies des Ansaugschnorchels (3) ermöglichen auch die wirkungsvolle Ausbildung einer Geräuschabsorptionsstrecke (7) in Form eines dickwandigen Venturirohrs, welches aus einem geräuschdämpfenden Wandmaterial aufgebaut oder mit einem solchen Material beschichtet ist (vgl. Fig. 3 und 4). Die Absorptionsstrecke (7) wirkt breitbandig und eignet sich für mittlere und höhere Frequenzbereiche von ca. 150 bis 5000 Hz.

Die Ausführungsvariante gemäß Fig. 4 entspricht im wesentlichen derjenigen nach Fig. 3 und sieht zusätzlich an der Unterseite des unmittelbaren Eintrittsbereiches des Ansaugschnorchels (3) eine Wasseraustrittsöffnung (8) vor, wodurch Wasser aus der angesaugten Luft abgesondert werden kann. Der Wasseraustritt ist aufgrund der Gesamtkonzeption der inneren Geräuschdämpfungselemente nicht mit einer erhöhten Geräuschentwicklung verbunden.

Die Ausführungsvariante nach Fig. 5 sieht zusätzlich im vertikalen Ausgangsbereich des Knies des Ansaugschnorchels (3) einen sog. Pfeifenresonator (9) vor, der sich unmittelbar an die Durchtrittsöffnung (10) des Abzweigresonators (6) anschließt. Der Pfeifenresonator wirkt schmalbandig und eignet sich insbesondere für einen mittleren Frequenzbereich.

**Patentansprüche**

1. Luftansaugvorrichtung (1) für eine Brennkraftmaschine, mit einem Luftfilter und einer Geräuschdämpfungseinrichtung (2) im Kniebereich des Luftfilter-Ansaugschnorchels (3),
dadurch gekennzeichnet,
daß ein die Geräuschdämpfungseinrichtung enthaltender Schnorcheleinsatz als Modulbauteil ausgebildet ist, welches im Hinblick auf ein Dämpfungsoptimum je nach Brennkraftmaschinentyp auswählbar und in den Ansaug schnorchel einbaubar ist.

2. Luftansaugvorrichtung nach Anspruch 1, für eine Brennkraftmaschine eines Nutzfahrzeugs mit Fahrerhaus,
dadurch gekennzeichnet,
daß der Ansaugschnorchel (3) direkt hinter dem Fahrerhaus (4) angeordnet ist.

3. Luftansaugvorrichtung nach Anspruch 1 oder 2,
dadurch gekennzeichnet,
daß das innere Rohr des Ansaugschnorchels (3) nach Art eines Venturirohrs (5) diffusorartig ausgebildet ist.

4. Luftansaugvorrichtung nach Anspruch 3,
dadurch gekennzeichnet,
daß im äuberen Winkelbereich des Knies des Ansaugschnorchels (3) ein Abzweigresonator (6) ausgebildet ist.

5. Luftansaugvorrichtung nach einem der Ansprüche 1 bis 4,
dadurch gekennzeichnet,
daß das innere Rohr des Ansaugschnorchels (3) als Geräuschabsorptionsstrecke (7) ausgebildet, d.h. aus Geräusch dämpfungsmaterial aufgebaut oder mit diesem beschichtet ist (Fig. 3 und 4).

6. Luftansaugvorrichtung nach einem der Ansprüche 1 bis 5,
dadurch gekennzeichnet,
daß an der Unterseite des unmittelbaren Eintrittsbereichs des Ansaugschnorchels (3) eine Wasseraustrittsöffnung (8) vorgesehen ist (Fig. 4).

7. Luftansaugvorrichtung nach einem der Ansprüche 1 bis 6,
dadurch gekennzeichnet,
daß die Geräuschdämpfungseinrichtung (2) einen Pfeifenresonator (9) umfaßt, der im Ausgangsbereich des Knies des Ansaugschnorchels (3) vorgesehen ist (Fig.5).

8. Luftansaugvorrichtung nach Anspruch 7,
dadurch gekennzeichnet,
daß der Pfeifenresonator (9) sich unmittelbar an die Durchtrittsöffnung (10) des Abzweigresonators (6) an schliebt.

**Revendications**

1. Dispositif d'aspiration d'air (1) pour un moteur à combustion interne, avec un filtre à air et un équipement d'amortissement du bruit (2) dans la zone coudée du schnorchel d'aspiration d'air - filtre à air (3),
caractérisé en ce
qu'une garniture de schnorchel comportant l'équipement d'amortissement de bruit est réalisée en élément modulaire qui peut être choisi eu égard à un optimum d'amortissement selon le type de moteur à combustion interne t peut être installé dans le schnorchel d'aspiration.

2. Dispositif d'aspiration d'air selon la revendication 1, pour un moteur à combustion interne d'un véhicule utilitaire avec cabine de conducteur,
caractérisé en ce que
le schnorchel d'aspiration (3) est placé directement derrière la cabine du conducteur (4).

3. Dispositif d'aspiration d'air selon les revendications 1 ou 2,
caractérisé en ce que
le tube intérieur du schnorchel d'aspiration (3) est réalisé en diffuseur à la manière d'un tube de venturi (5).

4. Dispositif d'aspiration d'air selon la revendication 3,
caractérisé en ce que,
dans la zone angulaire extérieure du coude du schnorchel d'aspiration (3), est réalisé un résonateur de dérivation (6).

5. Dispositif d'aspiration d'air selon une des revendications 1 à 4,
caractérisé en ce que
le tube intérieur du schnorchel d'aspiration (3) est réalisé en tronçon d'absorption de bruit (7), c'est-à-dire construit en matériau absorbant le bruit ou recouvert avec celui-ci. (figures 3 et 4).

6. Dispositif d'aspiration d'air selon une des revendications 1 à 5,
caractérisé en ce que,
sur le côté inférieur de la zone d'entrée directe du schnorchel d'aspiration (3), est prévu un orifice d'évacuation d'eau (8) (figure 4).

7. Dispositif d'aspiration d'air selon une des revendications 1 à 6,
caractérisé en ce que
l'équipement d'amortissement de bruit (2) comprend un résonateur de sifflement (9), prévu dans la zone de sortie du coude du shnorchel d'aspiration (3) (figure 5).

8. Dispositif d'aspiration d'air selon la revendication 7,
caractérisé en ce que
le résonateur de sifflement (9) se raccorde directement à l'ouverture de passage (10) du résonateur de dérivation (6).

**Claims**

1. An air intake device (1) for an internal combustion engine, with an air filter and a noise damping device (2) in the bend region of the air filter intake piece (3),
characterised in that
an intake piece insert, containing the noise damping device, is constructed as a modular component, which is able to be selected depending on the type of internalcombustion engine as regards optimum damping, and which is able to be incorporated into the intake piece.

2. An air intake device according to Claim 1, for an internal-combustion engine of a commercial vehicle with a driver's cab,
characterised in that
the intake piece (3) is arranged directly behind the driver's cab (4).

3. An air intake device according to Claim 1 or 2,
characterised in that
the inner pipe of the intake piece (3) is constructed like a diffuser in the manner of a venturi pipe (5).

4. An air intake device according to Claim 3,
characterised in that
a branch resonator (6) is provided in the outer angle region of the bend region of the intake piece (3).

5. An air intake device according to one of Claims 1 to 4,
characterised in that
the inner pipe of the intake piece (3) is constructed as a noise absorption stage (7), i.e. is constructed from noise-damping material or is coated therewith (Fig. 3 and 4).

6. An air intake device according to one of Claims 1 to 5,
characterised in that
a water outlet opening (8) is provided on the underside of the immediate entry region of the intake piece (3) (Fig. 4).

7. An air intake device according to one of Claims 1 to 6,
characterised in that
the noise damping device (2) comprises a pipe resonator (9), which is provided in the outlet region of the bend region of the intake piece (3) (Fig. 5).

8. An air intake device according to Claim 7,
characterised in that
the pipe resonator (9) joins directly on to the through opening (10) of the branch resonator (6).

Fig. 1

Fig. 2

Fig. 3

Fig. 4

Fig. 5